# EUROPÄISCHE PATENTSCHRIFT

(11) **EP 2 017 502 B1**
(45) Veröffentlichungstag und Bekanntmachung des Hinweises auf die Patenterteilung: **05.09.2012**
(21) Anmeldenummer: 08159606.6
(22) Anmeldetag: 03.07.2008
(51) Int. Cl.: F16H 61/30, F16H 59/56

(54) **Verfahren und Schaltungsanordnung zum Unterstützen eines Schaltvorgangs bei einem Handschaltgetriebe**
Method and device for assisting shifting of a manual transmission
Procédé et dispositif destinés à assister un changement de vitesse pour une boîte de vitesse manuelle

(30) Priorität: 14.07.2007 DE 102007032936
(43) Veröffentlichungstag der Anmeldung: 21.01.2009
(73) Patentinhaber: ZF Friedrichshafen AG, 88038 Friedrichshafen (DE)
(72) Erfinder: Fischer, Dieter, 88149, Nonnenhorn (DE); Späth, Klaus, 88276, Berg (DE)

(56) Entgegenhaltungen:
- WO-A1-03/089815
- WO-A1-2004/042259
- WO-A1-2005/022007
- DE-A1- 19 839 854
- DE-A1- 19 900 820

## Beschreibung

Die vorliegende Erfindung bezieht sich auf ein Verfahren und eine Schaltungsanordnung gemäß der im Oberbegriff des Patentanspruches 1 bzw. 3 näher definierten Art.

Beispielsweise aus der Druckschrift DE 198 39 854 A1 ist eine Schaltvorrichtung für Kraftfahrzeug-Wechselgetriebe bekannt. Die Schaltvorrichtung umfasst eine Servounterstützungseinrichtung, die mit einem Vorratsbehälter verbunden ist. Zwischen dem Vorratsbehälter und der Servounterstützungseinrichtung ist eine Reduziereinrichtung vorgesehen, um die zugeführte Druckluft zu begrenzen. Durch eine Begrenzung der Druckluft wird eine Begrenzung der Unterstützungskraft erreicht, um eine Anpassung an zulässige Belastungen in den von der Unterstützungskraft beaufschlagten Bauteilen zu erzielen. Beispielsweise wird an den Synchronisiereinrichtungen der einzelnen Gangstufen, die von den Schaltschienen beim Schalten mit Unterstützungskraft betätigt werden, eine Reduzierung der synchronen Belastung ermöglicht.

Die Druckschrift WO 03/089815 A1 , welche alle Merkmale des Oberbegriffs des Anspruchs 1 bzw. 3 offenbart, zeigt eine elektro-pneumatische Schalteinheit für ein Fahrzeuggetriebe. Die Schalteinheit umfasst einen manuell betätigbaren Schalthebel zum Wählen und Schalten eines Hauptgetriebeteils und eines Gruppengetriebes, wobei eine Steuereinrichtung in Abhängigkeit der Betätigung einer Fahrzeugkupplung eine pneumatische Servounterstützungseinrichtung ansteuert, indem Ventile durch die Steuereinrichtung geöffnet werden, um die Servounterstützungseinrichtung mit Druckluft zur Unterstützung des Einlegens des Ganges zu versorgen.

Bei der bekannten Schalteinheit erfolgt die Freigabe der Druckluft kurz vor dem Trennpunkt der Kupplung, so dass sichergestellt ist, dass nur bei getrennter Kupplung der gewünschte Gang mit Servounterstützung eingelegt beziehungsweise synchronisiert werden kann. Es hat sich dabei gezeigt, dass bei Überschneidungsschaltungen zum Ausschalten des Ganges keine Unterstützung erfolgt. Dies führt zu Einbußen beim Schaltkomfort. Unter einer Überschneidungsschaltung wird hierbei ein gleichzeitiges Auskuppeln der Fahrzeugkupplung und Ausschalten bzw. Auslegen eines Ganges verstanden.

Der vorliegenden Erfindung liegt die Aufgabe zu Grunde, ein Verfahren und eine Schaltungsanordnung der eingangs beschriebenen Gattung vorzuschlagen, bei denen die Unterstützung der Schaltvorgänge verbessert und damit der Schaltkomfort weiter erhöht wird.

Diese Aufgabe wird erfindungsgemäß durch die Merkmale des Patentanspruches 1 beziehungsweise 3 gelöst. Weitere vorteilhafte Ausgestaltungen ergeben sich insbesondere aus den jeweiligen Unteransprüchen und den Zeichnungen.

Somit wird die Aufgabe durch ein Verfahren zum Unterstützen des Schaltvorgangs bei einem Handschaltgetriebe eines Fahrzeuges gelöst, bei dem über eine elektronische Steuereinrichtung in Abhängigkeit der Betätigung einer Fahrzeugkupplung beim Einlegen eines Ganges eine Servounterstützungseinrichtung angesteuert wird, wobei die Servounterstützungseinrichtung bei einer Überschneidungsschaltung (gleichzeitiges Auskuppeln der Fahrzeugkupplung und Ausschalten bzw. Auslegen eines Ganges) beim Auskuppeln der Fahrzeugkupplung vor dem Einlegen des nächsten Ganges bzw. während oder zu Beginn des Auskuppelvorganges von der Steuereinrichtung aktiviert beziehungsweise angesteuert wird.

Auf diese Weise kann durch das erfindungsgemäße Verfahren nicht nur das Einlegen eines Ganges sondern auch schon das vorangehende Auslegen beziehungsweise Ausschalten eines Ganges durch die Servounterstützungseinrichtung mit besonderem Vorteil unterstützt werden. Infolgedessen wird der gesamte Schaltvorgang für den Fahrer bequemer und somit der Schaltkomfort insbesondere bei Überschneidungsschaltungen verbessert.

Zum Aktivieren der Servounterstützungseinrichtung kann diese beispielsweise mit Druckluft versorgt werden.

Im Rahmen des erfindungsgemäßen Verfahrens ist vorgesehen, dass die Bestromung in Abhängigkeit des Auskuppelweges der Fahrzeugkupplung durchgeführt wird. Dazu wird ein z. B. als Magnetventil oder dergleichen ausgebildetes Steuerelement nach erkannter Kupplungsbetätigung bestromt und nach einem bestimmt Auskuppelweg der Fahrzeugkupplung wieder deaktiviert. Der Auskuppelweg wird zum Beispiel über einen Sensor an der Fahrzeugkupplung ermittelt. Kurz vor dem Trennpunkt der Fahrzeugkupplung muss die Druckluftversorgung wieder sichergestellt sein, damit die Schaltunterstützung beim Synchronisiervorgang bzw. beim Einlegen eines Ganges realisiert werden kann.

Im Rahmen des erfindungsgemäßen Verfahrens ist auch vorgesehen, dass die Bestromung in Abhängigkeit des Schaltweges eines Betätigungsmittels zum Schalten einer Übersetzungsstufe des Getriebes durchgeführt wird. Das Betätigungsmittel kann beispielsweise als

Schalthebel ausgebildet sein, der auf eine Schaltschiene wirkt, die über Schaltgabeln mit Schiebemuffen in Verbindung steht. Der Schaltweg kann beispielsweise über einen Sensor ermittelt werden, der die Position des Schalthebels, der Schaltschiene, der Schaltgabel oder der Schiebemuffe erfasst.

Gemäß einer Weiterbildung der Erfindung kann vorgesehen sein, dass ein z. B. als Magnetventil oder dergleichen ausgebildetes Steuerelement über ein vorbestimmtes Zeitintervall nach erkannter Kupplungsbetätigung der Fahrzeugkupplung bestromt wird. Beispielsweise ist es möglich, dass die Freischaltung der Druckluftversorgung nur kurzzeitig erfolgt, um z. B. einen kurzen Druckstoß zu erzeugen, der das Ausschalten des Ganges unterstützt und damit den gewünschten Schaltkomfort auch beim Auslegen des Ganges erzeugt. Danach wird die Bestromung des Magnetventils wieder unterbrochen. Diese Ansteuerungsweise ist vorteilhaft bei besonders schnell durchgeführten Auskuppel- bzw. Schaltvorgängen.

Die der Erfindung zu Grunde liegende Aufgabe wird auch durch eine Schaltungsanordnung zum Wählen und Schalten von Gängen bei einem Handschaltgetriebe eines Fahrzeuges gelöst, bei der zum Ansteuern eines Schaltvorganges eine elektronische Steuereinrichtung vorgesehen ist, die in Abhängigkeit der Betätigung einer Fahrzeugkupplung beim Einlegen eines Ganges eine Servounterstützungseinrichtung ansteuert, die mit einem Luftvorratsbehälter verbunden ist, wobei die Servounterstützungseinrichtung zur Versorgung mit Druckluft über zumindest ein Steuerelement mit dem Luftvorratsbehälter verbunden ist, und wobei das Steuerelement über die Steuereinrichtung bei einer Überschneidungsschaltung beim Auskuppeln vor dem Einlegen des Ganges bzw. während oder zu Beginn eines Auskuppelvorganges zum Aktivieren der Servounterstützungseinrichtung ansteuerbar ist.

Mit der erfindungsgemäß vorgeschlagenen Schaltungsanordnung kann sowohl das Ausschalten als auch das Einschalten des gewünschten Ganges durch die Servounterstützungseinrichtung für den Fahrer erleichtert werden. Auf diese Weise wird der Schaltkomfort erhöht.

Im Rahmen der Erfindung ist vorgesehen, dass als Steuergerät zumindest ein Magnetventil oder dergleichen vorgesehen ist, welches über die Steuereinrichtung bestrombar ist. Sobald das Magnetventil bestromt wird, kann Druckluft zur Servounterstützungseinrichtung geführt werden, um die Schaltunterstützung zu realisieren. Die Dauer und der Zeitpunkt der Bestromung wird von der Betätigung der Fahrzeugkupplung abhängig gemacht.

Um den Zeitpunkt und die Dauer der Bestromung genau bestimmen zu können, ist vorgesehen, dass ein Wegsensor oder dergleichen zum Erkennen des Auskuppelvorganges an der Fahrzeugkupplung vorgesehen ist, wobei die Daten an die Steuereinrichtung zum Auswerten übertragen werden können. Anhand der übermittelten Daten kann dann die Art der Bestromung und damit die Art der Unterstützung sowie der Zeitpunkt, wie bereits bei dem Verfahren ausführlich beschrieben, erfolgen.

Im Rahmen einer besonders vorteilhaften Ausführungsvariante der Erfindung kann bei der Schaltungsanordnung vorgesehen sein, dass als Magnetventil zur Druckluftversorgung der Servounterstützungseinrichtung zumindest eines der zum Aktivieren oder Deaktivieren eines Gruppengetriebes vorgesehenen Magnetventile verwendet wird. Üblicherweise sind zum Aktivieren oder Deaktivieren eines Gruppengetriebes, wie zum Beispiel eines Splitgruppengetriebes bereits Magnetventile bei der Schaltungsanordnung vorgesehen, um Schaltungen im Splitgruppengetriebe pneumatische durchführen zu können. Dies hat den Vorteil, dass kein zusätzliches Magnetventil zur Druckversorgung der Servounterstützungseinrichtung beim Unterstützen des Ausschaltens bzw. Auslegens eines Ganges erforderlich ist.

Vorzugsweise können die Magnetventile zum Aktivieren oder Deaktivieren des Gruppengetriebes über ein Wechselventil oder dergleichen mit der Servounterstützungseinrichtung verbunden sein. Auf diese Weise kann das Unterstützen des Ausschaltens eines Ganges sowohl über das eine als auch über das andere Magnetventil gesteuert werden.

Nachfolgend wird die vorliegende Erfindung anhand der Zeichnungen weiter erläutert. Es zeigen:
- Fig. 1: eine schematische Teilansicht eines ersten Ausführungs- beispiels einer erfindungsgemäßen Schaltungsanordnung; und
- Fig. 2: eine schematische Teilansicht eines zweiten Ausführungs- beispiels der erfindungsgemäßen Schaltungsanordnung.

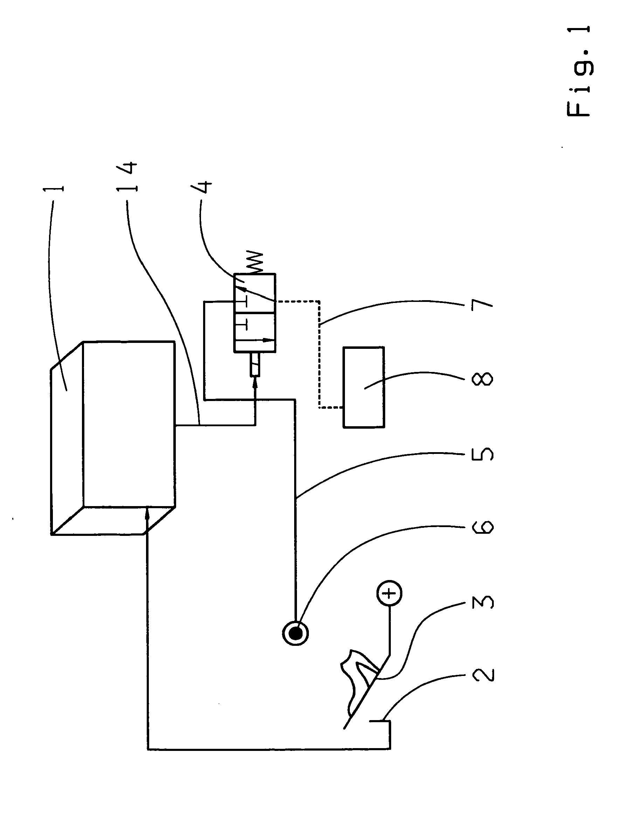

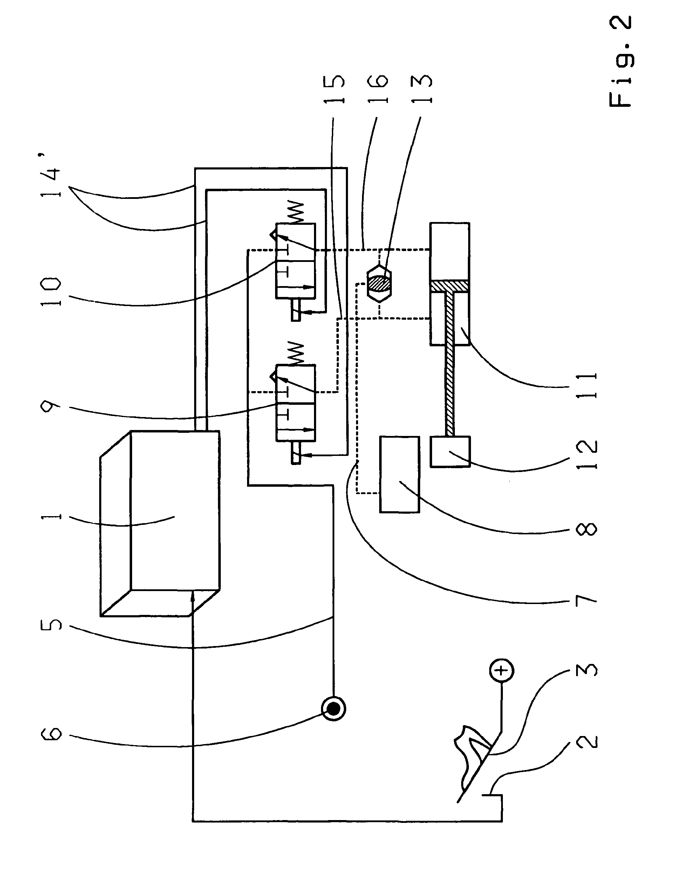

In den Figuren 1 und 2 sind verschiedene Ausführungsbeispiele einer findungsgemäß vorgeschlagenen Schaltungsanordnung zum Wählen und Schalten von Gängen bei einem Handschaltgetriebe eines Fahrzeuges dargestellt, wobei lediglich die für die Erfindung wesentlichen Bauteile gezeigt und beschrieben werden.

Bei dem in Figur 1 dargestellten ersten Ausführungsbeispiel umfasst die Schaltungsanordnung eine elektronische Steuereinrichtung 1, die über ein nicht weiter dargestelltes Fahrzeugnetzwerk z. B. Fahrzeug relevante Daten sammelt und auswertet, um die gewünschten Schaltvorgänge von einer nicht weiter dargestellten Schalteinrichtung der Schaltungsanordnung durchführen zu können.

Die Steuereinrichtung 1 ist mit einem Sensor 2 zum Erfassen einer Betätigung einer Fahrzeugkupplung über ein Kupplungspedal 3 gekoppelt. Der Sensor 2 ist beispielsweise als Wegsensor ausgebildet, um den Auskuppelweg der Fahrzeugkupplung erfassen zu können.

Ferner ist die Steuereinrichtung 1 mit einem Magnetventil 4 zum Ansteuern über eine elektrische Steuerleitung 14 verbunden. Das Magnetventil 4 ist über eine Zuleitung 5 mit einem Luftvorratsbehälter 6 verbunden, der das Magnetventil 4 mit Druckluft beaufschlagt. Über eine Druckluft-Versorgungsleitung 7 ist eine Servounterstützungseinrichtung 8 an das Magnetventil 4 angeschlossen. Die Servounterstützungseinrichtung 8 kann die nicht weiter dargestellte Schalteinrichtung des Handschaltgetriebes pneumatisch unterstützen, so dass bei betätigter Fahrzeugkupplung das Einlegen eines Ganges für den Fahrer erleichtert wird.

Erfindungsgemäß ist vorgesehen, dass auch das Ausschalten beziehungsweise das Herausnehmen eines Ganges während des Auskuppelvorganges der Fahrzeugkupplung, welches dem Einlegen eines Ganges vorgeschaltet ist, ebenfalls von der Servounterstützungseinrichtung 8 pneumatisch unterstützt wird. Auf diese Weise wird der gesamte Schaltvorgang bei Überschneidungsschaltungen für den Fahrer erleichtert, so dass der Schaltkomfort dadurch erhöht wird.

Dazu kann die Steuereinrichtung 1 bei betätigter Fahrzeugkupplung, welches durch den Sensor 2 an die Steuereinrichtung 1 übermittelt wird, das Magnetventil 4 bestromen, so dass eine Druckluft-Freigabe erfolgt und die mit dem Magnetventil 4 verbundene Servounterstützungseinrichtung 8 mit Druckluft über die Versorgungsleitung 7 versorgt wird, um den Schaltvorgang bei der Schalteinrichtung unterstützen zu können.

Wenn über den Sensor 2 der Beginn des Auskuppelvorganges der Fahrzeugkupplung erfasst wird, kann das Magnetventil 4 kurzzeitig zum Erzeugen eines kurzen Druckstoßes oder auch über einen bestimmten Auskuppelweg der Fahrzeugkupplung bestromt werden, so dass die Servounterstützungseinrichtung 8 zur Schaltunterstützung aktiviert wird.

In Figur 2 ist ein zweites Ausführungsbeispiel der erfindungsgemäßen Schaltungsanordnung dargestellt. Dieses Ausführungsbeispiel unterscheidet sich von dem ersten Ausführungsbeispiel lediglich darin, dass als Magnetventil 4 eines der bereits vorhandenen Magnetventile 9, 10 verwendet wird. Die Magnetventile 9,10 sind vorgesehen, um Schaltungen bei einem Splitgruppengetriebe 12 des Handschaltgetriebes zu ermöglichen oder zu verhindern.

Dies kann dadurch erreicht werden, dass bei getretenem Kupplungspedal 3 eines der Magnetventile 9, 10 über die Steuereinrichtung 1 bestromt wird, so dass Druckluft über entsprechende Leitungen 15, 16 entweder in die linke oder rechte Kammer eines Schaltzylinders 11 des Splitgruppengetriebes 12 eintreten kann. Dadurch kann der Schaltzylinder 11 das Splitgruppengetriebe 12 entsprechend ansteuern.

Darüber hinaus können die beiden Magnetventile 9, 10 zur Druckluftversorgung der Servounterstützungseinrichtung 8 von der Steuereinrichtung 1 über die elektrischen Steuerleitungen 14' derart bestromt werden, dass Druckluft über die Leitungen 15, 16 zu einem Wechselventil 13 geführt wird. Das Wechselventil 13 beaufschlagt über die Druckluft-Versorgungsleitung 7 die Servounterstützungseinrichtung 8 mit Druckluft, so dass eine pneumatische Unterstützung zum Beispiel zu Beginn des Auskuppelvorganges mit der Servounterstützungseinrichtung 8 erfolgt.

Bei dem zweiten Ausführungsbeispiel ergibt sich der zusätzliche Vorteil, dass durch die Verwendung der bereits vorhandenen Magnetventile 9,10 ein zusätzliches Magnetventil zur Druckluftversorgung der Servounterstützungseinrichtung 8 aufgrund der Doppelfunktion der bereits vorhandenen Magnetventile 9,10 nicht erforderlich ist.

### Bezugszeichen

- 1: Steuereinrichtung
- 2: Sensor
- 3: Kupplungspedal
- 4: Magnetventil
- 5: Zuleitung
- 6: Luftvorratsbehälter
- 7: Druckluft-Versorgungsleitung
- 8: Servounterstützungseinrichtung
- 9: Magnetventil für Splitgruppengetriebe
- 10: Magnetventil für Splitgruppengetriebe
- 11: Schaltzylinder
- 12: Splitgruppengetriebe
- 13: Wechselventil
- 14, 14': Elektrische Steuerleitung
- 15: Leitung
- 16: Leitung

## Patentansprüche

1. Verfahren zum Unterstützen eines Schaltvorganges bei einem Handschaltgetriebe eines Fahrzeuges, bei dem über eine elektronische Steuereinrichtung (1) in Abhängigkeit der Betätigung einer Fahrzeugkupplung beim Einlegen eines Ganges eine Servounterstützungseinrichtung (8) angesteuert wird, wobei die Servounterstützungseinrichtung (8) bei einer Überschneidungsschaltung, bestehend aus gleichzeitigem Auskuppeln der Fahrzeugkupplung und Aulegen eines Ganges, während des Auskuppelvorganges der Fahrzeugkupplung von der Steuerein-richtung (1) angesteuert wird, und die Servounterstützungseinrichtung (8) zum Aktivieren durch Bestromung eines Magnetventils (4, 9, 10) mit Druckluft versorgt wird, **dadurch gekennzeichnet, dass** die Bestromung beim Auskuppeln in Abhängigkeit des Auskuppelweges der Fahrzeugkupplung durchgeführt wird oder die Bestromung beim Auslegen des Ganges in Abhängigkeit des Schaltweges eines Betätigungsmittels zum Schalten einer Übersetzungsstufe des Getriebes durchgeführt wird.

2. Verfahren nach Anspruch 1, **dadurch gekennzeichnet, dass** die Bestromung bei Erkennung des Auskuppelvorganges der Fahrzeugkupplung zeitlich begrenzt durchgeführt wird.

3. Schaltungsanordnung zum Wählen und Schalten von Gängen bei einem Handschaltgetriebe eines Fahrzeuges, mit einer elektronischen Steuereinrichtung (1) zum Ansteuern eines Schaltvorganges, die in Abhängigkeit der Betätigung einer Fahrzeugkupplung beim Einlegen eines Ganges eine Servounterstützungseinrichtung (8) ansteuert, die mit einem Luftvorratsbehälter (6) verbunden ist, wobei die Servounterstützungseinrichtung (8) zur Versorgung mit Druckluft über zumindest ein Steuerelement mit dem Luftvorratsbehälter (6) verbunden ist, wobei das Steuerelement über die Steuereinrichtung (1) bei einer Überschneidungsschaltung, bestehend aus gleichzeitigem Auskuppeln der Fahrzeugkupplung und Auslegen eines Ganges, während des Auskuppelvorganges der Fahrzeugkupplung zum Aktivieren der Servounterstützungseinrichtung (8) ansteuerbar ist und als Steuerelement zumindest ein Magnetventil (4) vorgesehen ist, welches über die Steuereinrichtung (1) bestrombar ist, sowie ein Sensor (2) zum Erkennen des Auskuppelvorganges an der Fahrzeugkupplung vorgesehen ist, welcher mit der Steuereinrichtung (1) zur Datenübertragung gekoppelt ist, **dadurch gekennzeichnet,**
**dass** der Sensor (2) den Auskuppeiweg der Fahrzeugkupplung beim Auskuppeln ermittelt, um in Abhängigkeit des Auskuppelweges den Beginn der Bestromung des Magnetventils (4) und die Desaktivierung des Magnetventils (4) zu bestimmen.

4. Schaltungsanordnung nach Anspruch 3, **dadurch gekennzeichnet, dass** als Magnetventil (4) zur Druckluftversorgung der Servounterstützungseinrichtung (8) zumindest eines der zum Aktivieren oder Deaktivieren eines Gruppengetriebes vorgesehenen Magnetventile (9, 10) verwendbar ist.

5. Schaltungsanordnung nach Anspruch 4, **dadurch gekennzeichnet, dass** die Magnetventile (9, 10) zum Aktivieren oder Deaktivieren eines Gruppengetriebes über ein Wechselventil (13) mit der Servounterstützungseinrichtung (8) verbunden sind.

## Claims

1. Method for assisting a shifting operation in a manual transmission of a vehicle in which a servo-assistance device (8) is actuated via an electronic control device (1) as a function of the activation of a vehicle clutch when a gear is engaged, wherein the servo-assistance device (8) is actuated by the control device (1) in the case of an overlapping gearshift, comprising simultaneous disengagement of the vehicle clutch and engagement of a gear, during the operation of disengaging the clutch of the vehicle clutch, and the servo-assistance device (8) is supplied with compressed air for activation by supplying current to a solenoid valve (4, 9, 10), **characterized in that** the current is supplied during disengagement of the clutch as a function of the travel of clutch disengagement of the vehicle clutch or the current is supplied during disengagement of the gear as a function of the shift travel of an activation means for shifting of a transmission ratio of the transmission.

2. Method according to Claim 1, **characterized in that** the supply of current is carried out for a restricted period of time in the case of detection of the operation of disengaging the clutch of the vehicle clutch.

3. Shift arrangement for selecting and shifting gears in a manual transmission of a vehicle, with an electronic control device (1) for actuating a shift operation, which electronic control device (1) actuates a servo-assistance device (8) as a function of the activation of a vehicle clutch when a gear is engaged, which servo-assistance device (8) is connected to an air reservoir (6), wherein the servo-assistance device (8) is connected via at least one control element to the air reservoir (6) for supply with compressed air, wherein the control element can be actuated via the control device (1) in the case of an overlapping gearshift, comprising simultaneous disengagement of the vehicle clutch and disengagement of a gear, during the operation of disengaging the clutch of the vehicle clutch for activation of the servo-assistance device (8) and at least one solenoid valve (4) is provided as the control element, which solenoid valve (4) can be supplied with current via the control device (1), and a sensor (2) for detecting the operation of disengaging the clutch is provided at the vehicle clutch, which sensor (2) is coupled to the control device (1) for data transmission,
**characterized in that**
the sensor (2) identifies the travel of clutch disengagement of the vehicle clutch during disengagement of the clutch in order to determine the start of the supply of current to the solenoid valve (4) and the deactivation of the solenoid valve (4) as a function of the travel of clutch disengagement.

4. Shift arrangement according to Claim 3, **characterized in that** at least one of the solenoid valves (9, 10) provided for activation or deactivation of a group transmission can be used as the solenoid valve (4) for compressed air supply to the servo-assistance device (8).

5. Shift arrangement according to Claim 4, **characterized in that** the solenoid valves (9, 10) are connected via a shuttle valve (13) to the servo-assistance device (8) for activation and deactivation of a group transmission.

## Revendications

1. Procédé destiné à assister un changement de vitesses dans une boîte de vitesses à changement de vitesses manuel d'un véhicule, dans lequel un dispositif d'assistance par asservissement (8) est commandé par le biais d'un dispositif de commande électronique (1) en fonction de l'actionnement d'un embrayage du véhicule lors de l'enclenchement d'un rapport, le dispositif d'assistance par asservissement (8), dans le cas d'un passage de vitesses à chevauchement, constitué d'un débrayage de l'embrayage du véhicule et d'une sortie de rapport simultanés, étant commandé par le dispositif de commande (1) pendant l'opération de désaccouplement de l'embrayage du véhicule, et le dispositif d'assistance par asservissement (8), pour l'activation par alimentation en courant d'une électrovanne (4, 9, 10), étant alimenté en air sous pression, **caractérisé en ce que** l'alimentation en courant est effectuée lors du débrayage en fonction de la course de débrayage de l'embrayage du véhicule, ou l'alimentation en courant est effectuée lors de la sortie de rapport en fonction de la course de changement de vitesses d'un moyen d'actionnement pour commuter un étage de multiplication de la boîte de vitesses.

2. Procédé selon la revendication 1, **caractérisé en ce que** l'alimentation en courant est effectuée à la détection de l'opération de débrayage de l'embrayage du véhicule de manière limitée dans le temps.

3. Agencement de changement de vitesses pour la sélection et le passage de rapports dans une boîte de vitesses à changement de vitesses manuel d'un véhicule, comprenant un dispositif de commande électronique (1) pour commander une opération de changement de vitesses, lequel commande, en fonction de l'actionnement d'un embrayage du véhicule, lors de l'enclenchement d'un rapport, un dispositif d'assistance par asservissement (8) qui est connecté à un réservoir d'air (6), le dispositif d'assistance par asservissement (8), pour l'alimentation en air sous pression, étant connecté par le biais d'au moins un élément de commande au réservoir d'air (6), l'élément de commande pouvant être commandé par le biais du dispositif de commande (1) dans le cas d'un passage de vitesses à chevauchement, constitué d'un débrayage de l'embrayage du véhicule et d'une sortie de rapport simultanés, pendant l'opération de débrayage de l'embrayage du véhicule pour activer le dispositif d'assistance par asservissement (8), et au moins une électrovanne (4) étant prévue en tant qu'élément de commande, laquelle peut être alimentée en courant par le biais du dispositif de commande (1), et un capteur (2) pour détecter l'opération de débrayage au niveau de l'embrayage du véhicule étant prévu, lequel est accouplé au dispositif de commande (1) pour le transfert de données,
**caractérisé en ce que**
le capteur (2) détermine la course de débrayage de l'embrayage du véhicule lors du débrayage, afin de déterminer, en fonction de la course de débrayage, le début de l'alimentation en courant de l'électrovanne (4) et la désactivation de l'électrovanne (4).

4. Agencement de changement de vitesses selon la revendication 3, **caractérisé en ce que** l'on peut utiliser comme électrovanne (4) pour l'alimentation en air sous pression du dispositif d'assistance par asservissement (8) au moins l'une des électrovannes (9, 10) prévues pour l'activation ou la désactivation d'une transmission à groupe relais.

5. Agencement de changement de vitesses selon la revendication 4, **caractérisé en ce que** les électrovannes (9, 10) pour l'activation ou la désactivation d'une transmission à groupe relais sont connectées au dispositif d'assistance par asservissement (8) par le biais d'une soupape d'échange.
